Europäisches Patentamt

European Patent Office

Office européen des brevets

(11) Numéro de publication : **0 344 140 B1**

**FASCICULE DE BREVET EUROPEEN**

(12)

(19)

⑪

(12)

(45) Date de publication du fascicule du brevet :
**18.08.93 Bulletin 93/33**

(21) Numéro de dépôt : **89870061.2**

(22) Date de dépôt : **27.04.89**

(51) Int. Cl.⁵ : **C08F 297/04,** C08G 81/02

(54) Procédé de préparation de copolymères séquencés.

Le dossier contient des informations
techniques présentées postérieurement au
dépôt de la demande et ne figurant pas dans le
présent fascicule.

(30) Priorité : **27.04.88 BE 8800478**

(43) Date de publication de la demande :
**29.11.89 Bulletin 89/48**

(45) Mention de la délivrance du brevet :
**18.08.93 Bulletin 93/33**

(84) Etats contractants désignés :
**AT BE CH DE ES FR GB GR IT LI LU NL SE**

(56) Documents cités :
**EP-A- 0 002 012**
**EP-A- 0 171 225**
**US-A- 3 661 873**
**US-A- 4 304 886**

(73) Titulaire : **FINA RESEARCH S.A.**
**Zone Industrielle C**
**B-7181 Feluy (BE)**

(72) Inventeur : **Lanza, Emmanuel**
**Avenue du Champ de Mai 12 Bte 47**
**B-1410 Waterloo (BE)**
Inventeur : **Naveau, Jean M.M.G.**
**Rue du Paradis 89**
**B-1400 Nivelles (BE)**
Inventeur : **Daumerie, Michel**
**Elderwood 4215**
**Seabrook Texas 77586 (BE)**

(74) Mandataire : **Leyder, Francis**
**c/o Fina Research S.A. Zone Industrielle C**
**B-6520 Feluy (Feluy) (BE)**

## Description

La présente invention se rapporte à un nouveau procédé pour préparer des copolymères séquencés en présence de systèmes d'agents de couplage des séquences polymériques. En particulier, la présente invention se rapporte à un procédé pour préparer des copolymères séquencés linéaires ou quasi-linéaires, formés de séquences polyvinylaromatiques-polydiènes conjugués couplés par des agents de couplage.

La présente invention se rapporte également à des copolymères séquencés préparés avec de nouveaux systèmes d'agents de couplage, et ayant des propriétés physiques améliorées par rapport à celles des copolymères séquencés linéaires usuels.

Le couplage de chaînes polymères terminées par un atome de lithium (encore appelées polymères de base vivants) est bien connu ainsi que les agents de couplage utilisés à cet effet. Généralement, on fait réagir une chaîne polymère terminée par un atome de lithium avec un composé ayant deux ou plusieurs groupes fonctionnels capables de réagir avec la liaison carbone-lithium de la chaîne polymère terminée par un atome de lithium.

Selon que l'on veuille former des polymères linéaires ou pluribranchés, on utilise des agents de couplage ayant deux ou respectivement plusieurs sites réactifs ou groupes réactionnels.

De tels agents de couplage pour former des copolymères séquencés linéaires sont par exemple des dihaloalcanes comme le dibromoéthane, comme cela est décrit dans GB-A- 1.014.999.

On a également décrit l'utilisation de systèmes d'agents de couplage polyfonctionnels dans le EP-A- 0 002 012 selon lequel on utilise en premier lieu l'addition d'un monomère polyvinylique qui agit comme agent de couplage non-désactivant, et en second lieu un agent de couplage di- ou tri- fonctionnel qui peut être désactivant ou non désactivant. Ce type de système d'agent de couplage conduit à de nombreux branchements difficilement contrôlables.

Le brevet US-A-4 304 886 décrit l'utilisation de mélanges d'agents de couplage, quels qu'ils soient, en vue d'obtenir un polymère ayant une fonctionalité globale désirée supérieure à 2 sans devoir mélanger plusieurs polymères. Cependant, ce brevet enseigne que ce système de mélange d'agents de couplage conduit à de moins bonnes propriétés mécaniques.

Le brevet US-A- 3.880.954 décrit l'utilisation d'alkylpolyalkoxysilane comme seul agent de couplage ayant au moins deux et de préférence trois groupes alkoxy; cependant, ce type d'agent ne permet pas à lui seul d'obtenir les propriétés souhaitées et de plus il conduit à la formation de sous-produits gênants tels que les alcools correspondants.

De plus, il est bien connu que le résidu de l'agent de couplage reste dans le copolymère formé et est donc susceptible de laisser des résidus toxiques dans les polymères, ce qui peut être gênant dans certaines utilisations et notamment dans le domaine de l'emballage alimentaire.

C'est la raison pour laquelle il existe donc un besoin pour concevoir un procédé de préparation de copolymères séquencés qui met en oeuvre des agents de couplage ne présentant pas de toxicité résiduelle tout en conservant au moins les propriétés physiques souhaitées.

La présente invention a pour objet un procédé pour préparer des copolymères vinylaromatiques-diènes conjugués avec de nouveaux systèmes d'agents de couplage qui permette d'obtenir des copolymères séquencés ayant des propriétés physiques et rhéologiques améliorées.

La présente invention a également pour objet un procédé pour préparer des copolymères séquencés monovinylaromatiques-diènes conjugués permettant de faire intervenir des agents de couplage essentiellement sans toxicité résiduelle.

Le procédé de l'invention pour la production de copolymères séquencés par couplage de copolymères de base séquencés terminés par un atome de lithium de formule type S-B-Li dans laquelle S est une séquence d'hydrocarbure monovinylaromatique et B une séquence de diène conjugué, est caractérisé en ce que l'on utilise au moins un agent de couplage difonctionnel désactivant, et au moins un agent de couplage polyfonctionnel désactivant dans un rapport tel que le polymère linéaire obtenu par couplage représente de 65 à 95% en poids de l'ensemble du matériau polymère obtenu par couplage.

Selon le procédé de la présente invention, on prépare un copolymère de base séquencé par polymérisation d'un monomère vinylaromatique pour former une première séquence dénommée S, et ce en présence d'un composé organolithium comme catalyseur, et en présence d'un hydrocarbure inerte comme solvant. On ajoute ensuite un monomère de diène conjugué (au milieu réactionnel) pour former un copolymère séquencé du type S-B-Li dans lequel B représente la séquence de diène conjugué.

Comme catalyseur, on utilise généralement des alkyllithium, éventuellement branchés comme les alkyles secondaires, ayant de 3 à 8 atomes de carbone. Cependant, on préfère utiliser le n-butyllithium pour des raisons purement de facilité d'approvisionnement.

Comme solvant, on utilise généralement les hydrocarbures paraffiniques, cycloparaffiniques et aromati-

2

ques ainsi que leurs mélanges. Par exemple, le n-pentane, le n-hexane, le n-heptane, le 2,2,4-trimethylpentane, le cyclohexane, le cyclopentane, le benzène, le toluène et le xylène. Un solvant polaire tel qu'un éther cyclique (THF) ou acyclique ou une amine tertiaire peut être incorporé afin d'obtenir la formation d'une microstructure polymérique déterminée comme par exemple un taux accru des unités vinyle, ainsi que des séquences S/B statistiques.

A ce stade du procédé, la Demanderesse a trouvé, d'une manière inattendue, qu'en faisant réagir le copolymère de base séquencé terminé par un atome de lithium, appelé polymère de base vivant, avec au moins un agent de couplage difonctionnel et au moins un agent de couplage polyfonctionnel dans un rapport molaire tel que le polymère linéaire obtenu par couplage représente de 65 à 95% en poids de l'ensemble des polymères obtenus par couplage, l'on pouvait améliorer les propriétés physiques et rhéologiques des polymères séquencés. Plus particulièrement, la Demanderesse a trouvé que l'on doit observer les proportions respectives des différents agents de couplage, et notamment le rapport pondéral entre les polymères obtenus par couplage des chaînes avec les agents difonctionnel et polyfonctionnel, qui doit être compris entre 65/35 et 95/5 de préférence entre 75/25 et 90/10. De fait, lorsque l'on ne met pas suffisamment d'agent de couplage difonctionnel, on n'observe pas les propriétés voulues. Par contre, si l'on ne met pas un minimum d'agent de couplage polyfonctionnel, la synergie du point de vue des propriétés ne s'observe pas.

Comme agent de couplage difonctionnel, on peut notamment utiliser des diahlosilanes, des monoesters, des dicétones. Plus particulièrement, on utilise des dialkyldihalosilanes, des dicycloalkyldihalosilanes, ou encore des diaryldihalosilanes.

Comme agent de couplage polyfonctionnel, on utilise un composé choisi parmi les composés multiépoxydes, multiisocyanates, multiimines, multialdéhydes, multicétaones, multihalogénures comme les polyhalogénures de silicium et les polyhalosilanes, les multianhydrides, les multiesters, ainsi que leurs mélanges.

On utilise de préférence des agents de couplage polyfonctionnels ayant une fonctionnalité comprise entre 3 et 6, la valeur la plus préférée étant de 4.

A titre d'exemples de ces composés, on peut notamment citer comme agent de couplage difonctionnel, le diméthyldichlorosilane, le dicyclohexyldichlorosilane, ou le diphényldichlorosilane, ainsi que l'acétate de méthyle, l'acétate d'éthyle, le benzoate de méthyle, le benzoate de phényle, la 2,5-hexanedione.

Comme agent de couplage polyfonctionnel, on peut citer les huiles végétales polyépoxydées telles que l'huile de soja ou de lin époxydée, le 1,2; 5,6; 9,10-triépoxydécane, le benzène - 1,2,4-triisocyanate, le tri(1-aziridinyl)phosphine oxide (multiimine), le 1,4,7-naphtalènetricarboxaldéhyde, le 1,4,9,10-anthracènetétrone, le tétrachlorure de silicium, le tétrabromure de silicium, l'éthyltrichlorosilane, le méthyltrichlorosilane, le trichlorosilane, le dianhydride de l'acide pyromellitique (1,2,4,5-benzènetétracarboxylique), le diéthylapidate, le diméthylphtalate, le diéthylphtalate.

On peut remarque que des composés réunissant plus d'un type de groupe fonctionnel peuvent également être utilisés comme agent de couplage polyfonctionnel, tels que la 1,2,4,5-diépoxy-3-pentanone ou le gamma-glycidoxypropyl triméthoxysilane.

Parmi les agents difonctionnels et polyfonctionnels, on choisira ceux de plus faible toxicité résiduelle et de préférence ceux du type $SiX_nR_{4-n}$ (où X est un halogène, de préférence Cl, R est un radical alkyle, cycloalkyle ou aryle, de préférence méthyle, éthyle et/ou phényle, et n est un nombre entier de 2 à 4).

Les quantités d'agent de couplage à mettre en oeuvre sont aisément calculables. En effet, la réaction entre un agent de couplage, ayant un poids moléculaire $M_1$ et une fonctionnalité n, et des chaînes S-B-Li de poids moléculaire $M_2$, pris dans un rapport molaire 1:n, donnera théoriquement un copolymère de poids moléculaire $M_1 + nM_2$ diminué du P.M. des sous-produits de couplage; les déviations sont dues essentiellement aux traces d'impuretés ou à la chaleur, capables par exemple de désactiver des chaînes S-B-Li (donnant des copolymères de poids moléculaire environ égal à $M_1$, que l'on retrouve dans le produit final). Le total des agents de couplage mis en oeuvre est de préférence calculé de manière à coupler la totalité des chaînes S-B-Li, mais on peut en utiliser moins si l'on désire conserver une proportion accrue de copolymères S-B dans le produit final.

Le composé vinylaromatique qui constitue le bloc S du copolymère séquencé peut être le styrène, le vinyl toluène, le vinyl xylène, ou le vinyl naphtalène; tandis que les diènes conjugués sont généralement choisis parmi le butadiène, l'isoprène, le méthylisoprène et leurs homologues.

Le copolymère séquencé qui est ainsi formé par le procédé de l'invention se présente sous deux formes, l'une linéaire, de formule S - B - C - B - S dans laquelle C représente le résidu d'agent de couplage, dans la proportion de 65 à 95% en poids, de préférence de 75 à 90% en poids, et l'autre branchée pour le solde.

Le poids moléculaire (poids moléculaire moyen en poids) du copolymère de base peut varier dans de larges limites et est généralement compris entre 10.000 et 150.000, et de préférence entre 15.000 et 100.000, le bloc polyvinylaromatique représentant 20 à 40% en poids, de préférence 25 à 35%, du copolymère de base.

En général on réalise le procédé de l'invention en polymérisant une première séquence de monomère vinylaromatique, le plus souvent de styrène à une température comprise entre 20 et 60°C pendant une période de 20 minutes à 1 heure en présence d'un catalyseur n-alkyllithium, et en présence de cyclohexane comme solvant.

Lorsque l'on a polymérisé tout le monomère vinylaromatique, le plus souvent du styrène, on introduit dans la solution un monomère de diène conjugué comme le 1,3-butadiène. Ce monomère réagit entièrement au départ des extrémités vivantes.

Arrivé à ce stade du procédé, on a formé des chaînes polymériques du type S - B - Li. On introduit alors les agents de couplage comme défini plus avant. Le plus souvent on prend un mélange comprenant environ 80% en poids de dichlorodiméthylsilane avec 20% en poids de $SiCl_4$ ou de méthyltrichlorosilane.

La réaction de couplage dure de 0,1 à 1 heure à une température comprise entre 10 et 120°C.

Après le couplage, on peut désactiver les chaînes polymériques vivantes non-couplées éventuellement présentes par addition d'un terminateur de chaîne usuel comme un alcool ou un polyalkylphénol. Ensuite, on ajoute un système antioxydant adapté à l'usage final. En principe, il ne devrait pas subsister d'agent de couplage n'ayant pas réagi; il y a un avantage à utiliser comme agents de couplage les composés du type $SiX_nR_{4-n}$ car tout excès éventuel n'ayant pas réagi sera transformé en résidus non toxiques lors de l'entraînement du solvant à la vapeur.

Les exemples suivants sont donnés afin de mieux illustrer le procédé de la présente invention.

Exemple 1

On a d'abord polymérisé du styrène en présence de n-butyllithium comme catalyseur et en présence de cyclohexane comme solvant. On a démarré la réaction à une température de 50 à 55°C pour terminer vers une température de 60 à 65°C.

On a ensuite ajouté du 1,3-butadiène avec du cyclohexane comme solvant. On a réalisé cette polymérisation à une température comprise en moyenne entre 60 et 90°C. Lorsque cette polymérisation a été terminée on avait des chaînes vivantes du type S-B-Li.

On a ajouté un mélange comprenant 86% en poids de dichlorodiméthylsilane (DCDMS) et 14% en poids de $SiCl_4$.

On a réalisé la réaction de coupalge pendant 1 heure à 50°C.

Le copolymère séquencé obtenu (encore appelé polymère pur) contenait 31% de styrène et 69% de butadiène dont les propriétés sont indiquées ci-après.

Après addition d'antioxydants, le copolymère obtenu a été ensuite soumis à un traitement de désolvantisation à la vapeur.

## Caractéristiques du copolymère obtenu

| | |
|---|---|
| % styrène total | 31,0 % en poids |
| poids moléculaire (moyenne en poids) | 93.000 |
| % PS libre | 7% en poids |
| % Polymère base | 17% en poids |
| Agents de couplage | DCDMS/$SiCl_4$ (86/14 en poids) |

80% en poids des chaînes polymériques sont couplées via DCDMS

20% en poids des chaînes polymériques sont couplées via $SiCl_4$

| Propriétés du matériau copolymère obtenu | | n° standard |
|---|---|---|
| Dureté, Shore A/1 | 81 | ASTM - D 2240 |
| Abrasion (10N, 40m), $mm^3$ | 110 | DIN - 53516 |
| Résistance à la traction à la rupture, MPa | 23 | ASTM - D 412 |
| Allongement à la rupture, % | 770 | ASTM - D 412 |
| Résistance à la déchirure, N/mm | 23 | ASTM - D 624 |

Le polymère ainsi formé ne contient pas de résidu toxique de l'agent de couplage.

A titre de comparaison, on a effectué le couplage des mêmes chaînes polymériques avec un des agents de couplage simple et toxique, le 1,2-dibromoéthane (DBE).

Les propriétés suivantes ont été trouvées :

```
Dureté                                        79
Abrasion                                      125
Résistance à la traction à la rupture         18
Elongation à la rupture                       650
Résistance à la déchirure                     22
```

De plus, ce type d'agent a pour inconvénient d'être présent dans le polymère final, ce qui accroît la toxicité de celui-ci.

Ceci montre qu'avec le procédé de l'invention, on élimine non seulement le problème de la toxicité résiduelle, mais en plus on améliore considérablement les propriétés du matériau copolymère séquencé final obtenu.

Exemple 2

On prépare un matériau polymère comme décrit à l'exemple 1, sauf que l'on ajoute comme agents de couplage un mélange comprenant 78% en poids d'acétate d'éthyle (AE) et 22% en poids d'adipate de diéthyle (DEA).

```
Caractéristiques du polymère pur :

--------------------------------

% Styrène total    :  31,5
poids moléculaire :  98000
% PS Libre         :  5
% Polymère base    :  15
Agent de couplage :  Acetate d'éthyle (AE)/adipate de diéthyle (DEA)
                              (78/22 en poids)


80% en poids des chaines polymériques sont couplées via  AE
20% en poids des chaines polymériques sont couplées via  DEA
```

```
Propriétés du matériau polymère pur

-----------------------------------

Dureté, Shore A          :  83
Abrasion Din, mm$^3$     :  100
Force à la rupture       :  21
Elongation à la rupture  :  800
Déchirement              :  25
```

Le matériau polymère ainsi formé ne contient pas de résidu toxique des agents de couplage utilisés.

Exemple 3

On prépare un matériau polymère comme décrit à l'exemple 1, sauf que l'on ajoute comme agents de couplage un mélange comprenant 94% en poids de dichlorodimethylsilane (DCDMS) et 6% en poids de SiCl₄.

```
Caractéristiques du polymère pur

--------------------------------

% Styrène total       :  30,8

Poids moléculaire     :  95000

% PS Libre            :  4

% Polymère base       :  14

Agent de couplage : DCDMS/SiCl4 (94/6 en poids)


    91% des chaînes polymériques sont couplées via DCDMS (en poids)
     9% des chaînes polymériques sont couplées via SiCl4 (en poids)



Propriétés du matériau polymère pur

-----------------------------------

Dureté, Shore A/l         :  80

Abrasion, Din mm3         :  95

Force à la rupture        :  19

Elongation à la rupture :  840

Déchirement           .:  23
```

Le matériau polymère ainsi forméne contient pas de résidu toxique du système d'agents de couplage utilisés.

Exemple 4

On a utilisé le copolymère bloc préparé à l'exemple 1 dans une composition polymérique destinée à des articles en caoutchouc à usage technique :
Cette composition comprenait (parties en poids) :

6

```
Copolymère          :  70
EVA    OO 328       :  30 (copolymère éthylène-vinylacétate 28%; fluidité
                             3 g/10 min. à 190°C/2,16 kg; vendu sous le nom
                             Escorène par ESSO)
Huile médicinale   :  35
Acide stéarique    :  0,5
Cire                :  0,5 (cire microcristalline; densité 0,91 g/cm$^3$;
                             vendue sous le nom Antilux par RHEIN-CHEMIE)
2,4-bis(n-octylthio)-6-(4-hydroxy-3,5-di-tert-butylanilinol)-
-1,3,5-triazine    :  0,25 (vendu par Ciba-Geigy sous le nom IRGANOX 565)
TiO$_2$             :  3,0
```

Les propriétés de cette composition étaient les suivantes; comparées à celles du mélange comprenant le copolymère couplé via le 1,2-dibromoéthane.

| Propriétés | Copolymère couplé via DBE | Copolymère suivant Exemple 1 | Méthode Standard |
|---|---|---|---|
| Dureté (Shore A/1) | 54 | 54 | ASTM-D2240 |
| Abrasion (10N,40 m)(mm$^3$) | 350 | 330 | DIN-53516 |
| Fluidité (5kg/190°C)(g/10 min.) | 19 | 25 | ASTM-D1238 |
| Déformation rémanente après compression (22h/23°C) | 29 | 27 | ASTM-D395 |
| Résilience au rebondissement | 53 | 59 | DIN-53512 |
| Résistance à la traction à 300% d'allongement (MPa) | 1,6 | 1,9 | ASTM-D412 |
| Résistance à la traction à la rupture (MPa) | 9,9 | 9,6 | ASTM-D412 |
| Allongement à la rupture (%) | 950 | 1100 | ASTM-D412 |
| Résistance à la déchirure (N/mm) | 16 | 17 | ASTM-D624 |

Exemple 5

On a aussi utilisé le copolymère bloc préparé à l'exemple 1 dans une composition destinée aux applications "bitumes routiers". Cette composition comprenait :
Bitume B 180-200    : 85% en poids
Copolymère          : 15% en poids
Les propriétés de cette composition étaient les suivantes, comparées à celles du mélange comprenant les copolymères couplés via le 1,2-dibromoéthane (exemple comparatif 5a), le dichlorodiméthylsilane (DCDMS, exemple comparatif 5b) ou le dichlorodiphenylsilane (DCDPS, exemple comparatif 5c).

7

| Propriétés | Exemple 5 | Exemples comparatifs | | |
|---|---|---|---|---|
| | | 5a | 5b | 5c |
| Viscosité à 180°C, Pa.s | 4,4 | 4,9 | 4,8 | 8,3 |
| Viscosité à 160°C, Pa.s | 11,8 | 13,8 | 12,0 | 17,1 |
| Pénétration (25°C) 0.1mm | 49 | 55 | 57 | 54 |
| Pénétration (50°C) 0.1mm | 101 | 123 | 145 | 137 |
| T° ramollissement, °C | 111 | 112 | 107 | 108 |
| T° pliage à froid, °C | - 40 | - 35 | - 25 | - 35 |
| Fluage à 80°C, 45° | | | | |
| après 2h30, mm | 3 | 5 | 6 | 5 |
| après 5h , mm | 7 | 10 | 9 | 10 |
| après 24h, mm | 10 | 12 | 16 | 13 |
| Agent de couplage | DCDMS+SiCl4 | DBE | DCDMS | DCDPS |

On a suivi les prescriptions des méthodes standard ASTM-D5 et D36 respectivement pour les mesures de pénétration et de la température de ramollissement.

Cet exemple montre que le procédé de l'invention permet d'obtenir de meilleures propriétés rhéologiques et physiques.

**Revendications**

1. Procédé pour la production de copolymères séquencés par couplage de copolymères de base séquencés terminés par un atome de lithium de formule type S-B-Li dans laquelle S est une séquence d'hydrocarbure monovinylaromatique et B une séquence de diène conjugué, dans lequel on utilise au moins un agent de couplage difonctionnel désactivant et au moins un agent de couplage polyfonctionnel désactivant caractérisé en ce que le rapport molaire des agents de couplage est tel que le polymère linéaire obtenu par couplage représente de 65 à 95% en poids de l'ensemble du matériau polymère obtenu par couplage.

2. Procédé selon la revendication 1, caractérisé en ce que le polymère linéaire obtenu par couplage représente de 75 à 90% en poids de l'ensemble du matériau polymère obtenu par couplage.

3. Procédé selon l'une quelconque des revendications 1 ou 2, caractérisé en ce que l'on utilise, comme agent de couplage polyfonctionnel, au moins un agent de couplage ayant une fonctionnalité comprise entre 3 et 6.

4. Procédé selon l'une quelconque des revendications 1 à 3, caractérisé en ce que l'on utilise, comme agent de couplage difonctionnel désactivant, un silane du type $SiX_2R_2$, où X est un halogène et R un radical alkyle, cycloalkyle ou aryle.

5. Procédé selon l'une quelconque des revendications 1 à 3, caractérisé en ce que l'on utilise, comme agent de couplage polyfonctionnel désactivant, un silane du type $SiX_nR_{4-n}$, où X est un halogène, n est un nombre entier égal à 3 ou 4, et R est un radical alkyle, cycloalkyle ou aryle.

6. Procédé selon l'une quelconque des revendications 4 ou 5, caractérisé en ce que X est le chlore.

7. Procédé selon l'une quelconque des revendications 4 ou 5, caractérisé en ce que R est le radical méthyle,

EP 0 344 140 B1

éthyle et/ou phényle.

8. Procédé selon l'une quelconque des revendications 1 à 7, caractérisé en ce que l'on utilise, comme agent de couplage polyfonctionnel, au moins un agent de couplage ayant une fonctionnalité égale à 4.

9. Procédé selon l'une quelconque des revendications 1 à 8, caractérisé en ce que la quantité totale des agents de couplage mis en oeuvre est calculé de manière à coupler la totalité des chaînes.

## Patentansprüche

1. Verfahren zum Herstellen von Blockcopolymeren durch Kuppeln von Grund-Blockcopolymeren, die endständige Lithiumatome aufweisen und von der Art der Formel S-B-Li sind, in der S ein Block aus monovinylaromatischem Kohlenwasserstoff und B ein Block aus konjugiertem Dien ist, bei dem man mindestens ein desaktivierendes difunktionelles Kupplungsmittel und mindestens ein desaktivierendes polyfunktionelles Kupplungsmittel benutzt,
dadurch gekennzeichnet, daß
das molare Verhältnis der Kupplungsmittel derart ist, das das durch Kupplung erhaltene lineare Polymere 65 bis 95 Gew.-% der Gesamtheit des polymeren Materials ausmacht, das durch Kupplung erhalten wurde.

2. Verfahren nach Anspruch 1, dadurch gekennzeichnet, daß das durch Kuppeln erhaltene lineare Polymer 75 bis 90 Gew.-% der Gesamtheit des durch Kuppeln erhaltenen polymeren Materials ausmacht.

3. Verfahren nach einem der Ansprüche 1 oder 2, dadurch gekennzeichnet, daß als polyfunktionelles Kupplungsmittel mindestens ein Kupplungsmittel mit 3 bis 6 funktionellen Gruppen benutzt wird.

4. Verfahren nach einem der Ansprüche 1 bis 3, dadurch gekennzeichnet, daß man als difunktionelles desaktivierendes Kupplungsmittel ein Silan der Art $SiX_2R_2$ benutzt, worin X ein Halogen und R ein Alkyl-, Cycloalkyl- oder Arylrest ist.

5. Verfahren nach einem der Ansprüche 1 bis 3, dadurch gekennzeichnet, daß man als polyfunktionelles desaktivierendes Kupplungsmittel ein Silan der Art $SiX_nR_{4-n}$ benutzt, worin X ein Halogen. n eine ganze Zahl von 3 oder 4 und R ein Alkyl-, Cycloalkyl- oder Arylrest ist.

6. Verfahren nach einem der Ansprüche 4 oder 5, dadurch gekennzeichnet, daß X Chlor ist.

7. Verfahren nach einem der Ansprüche 4 oder 5, dadurch gekennzeichnet, daß R der Methyl-,Ethyl- und-/oder Phenylrest ist.

8. Verfahren nach einem der Ansprüche 1 bis 7, dadurch gekennzeichnet, daß man als polyfunktionelles Kupplungsmittel mindestens ein Kupplungsmittel mit 4 funktionellen Gruppen benutzt.

9. Verfahren nach einem der Ansprüche 1 bis 8, dadurch gekennzeichnet, daß die Gesamtmenge der Kupplungsmittel, die eingesetzt wird, so errechnet wird, daß die Gesamtheit der Ketten gekuppelt wird.

## Claims

1. Process for the production of block copolymers by coupling of block base copolymers terminated by a lithium atom of the typical formula S-B-Li, in which S is a monovinylaromatic hydrocarbon block and B is a conjugated diene block, characterized in that at least one difunctional deactivating coupling agent and at least one polyfunctional deactivating coupling agent are used in a molar ratio such that the linear polymer obtained by coupling represents 65 to 95% by weight of the total polymer material obtained by coupling.

2. Process according to claim 1, characterized in that the linear polymer obtained by coupling represents 75 to 90% by weight of the total polymer material obtained by coupling.

3. Process according to either of claims 1 and 2, characterized in that at least one coupling agent having a functionality of between 3 and 6 is used as the polyfunctional coupling agent.

4. Process according to any one of claims 1 to 3, characterized in that a silane of the type $SiX_2R_2$, where X is a halogen and R is an alkyl, cycloalkyl or aryl radical, is used as the difunctional deactivating coupling agent.

5. Process according to any one of claims 1 to 3, characterized in that a silane of the type $SiX_nR_{4-n}$, where X is a halogen, n is an integer equal to 3 or 4 and R is an alkyl, cycloalkyl or aryl radical, is used as the polyfunctional deactivating coupling agent.

6. Process according to either of claims 4 and 5, characterized in that X is chlorine.

7. Process according to either of claims 4 and 5, characterized in that R is the methyl, ethyl and/or phenyl radical.

8. Process according to any one of claims 1 to 7, characterized in that at least one coupling agent having a functionality equal to 4 is used as the polyfunctional coupling agent.

9. Process according to any one of claims 1 to 8, characterized in that the total amount of coupling agents used is calculated such that all the chains are coupled.